# EUROPEAN PATENT SPECIFICATION

(11) **EP 3 631 686 B1**
(45) Date of publication and mention of the grant of the patent: **15.10.2025**
(21) Application number: 18739631.2
(22) Date of filing: 21.05.2018
(51) Int. Cl.: B60K 35/22, B60K 35/28, G06T 13/80, B60K 35/00, G06T 11/20, G09G 3/20, G06F 40/103, G06F 40/109, G06V 30/142, G09G 5/00, G09G 5/24, B60K 35/21

(54) **SPEEDOMETER DISPLAY**
TACHOMETERANZEIGE
DISPOSITIF D'AFFICHAGE D'INDICATEUR DE VITESSE

(30) Priority: 22.05.2017 IN 201741017957
(43) Date of publication of application: 08.04.2020
(73) Proprietor: TVS Motor Company Limited, Chennai 600006 (IN)
(72) Inventor: JABEZ DHINAGAR, Samraj, Chennai 600006 (IN); DEVARAJ, Dhanya, Chennai 600006 (IN)
(74) Representative: Patentanwaltskanzlei Matschnig & Forsthuber OG
(86) International application number: PCT/IB2018/053554
(87) International publication number: WO 2018/215906

(56) References cited:
- US-A1- 2003 164 757
- US-A1- 2007 097 126
- US-B2- 7 954 951
- WIKIPEDIA: "Bezier curve", 17 September 2018 (2018-09-17), XP055507536, Retrieved from the Internet <URL:https://en.wikipedia.org/wiki/B%E9zier_curve> [retrieved on 20180917]

## Description

### FIELD OF INVENTION

The present invention is a vehicle speedometer display to avoid abrupt changes of numbers.

### BACKGROUND

In an existing speedometer, there is a digital display where numbers are replaced one over the other.

US 3868570 A titled □ ***Electronic digital speedometer***□ disclose an electronic digital speedometer having a liquid crystal display for displaying the speed of a motor vehicle. The speedometer is responsive to a plurality of speed pulses generated by a magnetic transducer and a tone wheel located in the transmission. There are, however, difficulties with this kind of display. Whenever there is a speed change, there is an abrupt change in numbers in the display. It is evident that the user sees a sudden transition of speed in the display. This sudden change creates difficulty for the user to understand the transformations between speed, and hence not very friendly and appealing to the user.

US 4788539 A titled □ ***Digital display device*□** discloses a digital device for a visually displaying the value of a continuously varying function, such as car speed. The device displays sub-ranges of a full scale, putting them individually in a viewing area. The displayed sub-ranges in the viewing area will be replaced as required to permit representation of the input function over the full scale. The device allows selection of a new sub-range with the property that the input function value initially will be at an interior position in the new sub-range, thereby preventing repeated rapid switching between sub-ranges. The sub-range display can be defined using scale markers in just a few fixed locations in the viewing area.

US 6844811 B2 titled □ ***Speedometer display and method for motor vehicles***□ provides an apparatus and method for display of speed that acts as a speedometer for an automobile. The apparatus includes a display coupled to an interior portion of a motor vehicle, which faces a driver. The display is paired with an output for recognizing a velocity rate of the motor vehicle. A first graphical display section of the display for outputting a first current speed indication of the motor vehicle using the first convention is also involved. The first graphical display portion is coupled to the output. A second graphical display portion of the display to output second current speed indication of the motor vehicle using a second convention is also included. The second graphical display portion is coupled to the first display portion such that the first current speed indication in the first convention is aligned to the second current speed indication in the second convention.

As mentioned in the above patents there are numerous flaws in the conventional digital display. Since the change in speed is rapid, there may be a flickering effect. The flickering can be a distracting visual flashing. For example, five of seven segments are changing in a transition between a □ 1□ and a □ 2□ digit and several digits may be changing simultaneously. This can be dangerous, as in the case of driving an automobile. To reduce this, a delay can be implemented between the changes in digits, but this may cause difficulty in the accurate display of current values. There is a trade-off between the visual stability of the display and the accuracy.

A method that avoids the problems of a numeral display is to use digital components to simulate the appearance of an analog meter. For example, a bar display, made with numerous display segments arranged in picket fence fashion that can be activated to produce a bar of varying length, is used in conjunction with a scale. This pseudo-analog display allows rapid viewing, as compared to the digit decoding required in the above numeral display.

However, there are difficulties with this bar display. Firstly, the bar display must be large enough to show the entire scale, as with the analog meter it simulates. More space is required for the display which will weigh more, and in general, the cost will be higher for the higher quantity of materials in the device. Secondly, the more precision is used to achieve a smooth simulation of an analog display, as with the number of segments in the bar display, the costlier the device will be. Another way to reduce the above problem is to have sets of the bar such as 0-20, 20-40, and so on. The bar indication is changed according to speed. But, the problem with the design is that the change between the bars will be quick, and becomes harder for the user to follow.

To avoid the above difficulties US Patent 4788539A**,** introduced a digital device wherein there is only one digital bar with start and end points were varied. For example, if the speed is 25, the start and end point changes to 0 and 35, respectively. If the speed is 45, then the start and end point changes to 35 and 50, and so on. Different indications for the speed like an arrow, bar, etc., can be used.

The above digital device also has some drawbacks. The change in start and end points in short time intervals may be confusing. Since it is a bar display, the space required to be displayed is large. The values may be incorrect while representing the bar display. The cost of building such a bar display is comparatively higher.

The objective of this invention is to overcome the problems associated with the above mentioned prior art and provide a digital display that communicates digital information to the user in a clear, precise and comfortable manner. The present invention accomplishes this by showing the existing number display with some animation. The present invention involves the change in number in a smooth manner, where the transition is not abrupt and is evidently seen by the user. Since the number display is used, the space involved is comparatively small, and there is a minimal computation power and memory increase when compared with the existing display.

These and other advantages of the present invention will become apparent from the following description of detailed embodiments thereof.

### [Text to be inserted before paragraph 0010]

US 7954951B2 discloses display of an image while transitioning between a first display mode to a second display mode in a speedometer unit.
US 2007/097126 A1 discloses a method for constructing of human readable animated alpha-numeric characters from a sequentially arranged graphical alpha-numeric characters shapes adaptable for processes by a data handling and transfer system.
US 2003/164757 A1 discloses a graphical display apparatus for motor vehicles having a first graphical display portion for outputting a first current speed indication of the motor vehicle using a first convention.

### SUMMARY

A digital display with a numerical transition in speedometer is disclosed which avoids the abrupt changes of numbers. The digital display includes a set of control points which forms numbers by twisting, winding, moving, and so on, to create digits. The transition of this type provides the user a pleasant display, and a smooth transition between figures is observed. The space of display is also reduced, and the cost of implementing the same is minimal. The presentation of the number transition is further extended to various forms like a thread forming into digits, bursting and converging of digits, dots joining to form digits, smoky digits, and calendar type (flipping) of numbers.

The speedometer can be used in all systems with digital display units, and all the vehicles using a digital display.

### BRIEF DESCRIPTION OF THE DRAWINGS

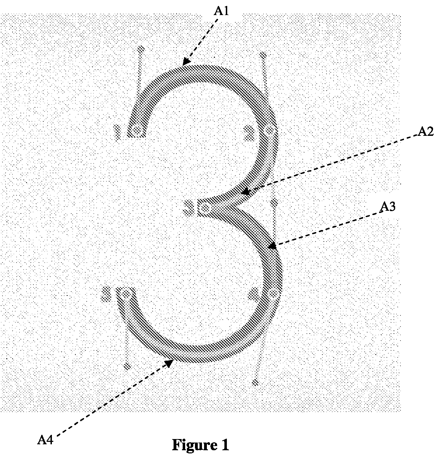

The detailed description is described with reference to the accompanying figures. The same numbers are used throughout the drawings to reference like features and components.
**.** **Figure 1** illustrates number three control points of a Thread type transition according to the invention.
**Figure 2** illustrates the process and components for the Thread type transition.
**Figure 3** illustrates the flowchart for the Thread type transition from 50 to 69.
**Figure 4** illustrates an example of control points in number three, in a Burst transition not according to the invention.
**Figure 5** illustrates bursting of numbers.
**Figure 6** illustrates an example of control points in number in a Dots transition not according to the invention.
**Figure 7** illustrates an example of smoky effect in number three in a Smoke away transition not according to the invention.
**Figure 8** illustrates speed display in a Flipping in transition not according to the invention.

### DETAILED DESCRIPTION

The below description illustrates number transition for displaying the transformation of information such as a vehicle speed. Although the vehicle speed is used in the preferred embodiment, the invention applies to other variables such as engine speed, fuel level, battery state of charge, distance traveled, acceleration, etc.

### Thread type transition

When there is a speed change, a shift in numbers is displayed as a thread forming numbers.

A speed sensor generates a signal 10 indicative of vehicle speed. The speed sensor output is provided to an instrument cluster. The instrument cluster has a logic block, in which the speed is split into units, tens and hundreds. The previous speed is also stored in the logic block as units, tens and hundred. For example, say the old speed is 50, and current speed is 69. So, the old speed 50 is split into 5 units, 0 tens and no hundreds. The current speed is 69, so 6 units, 9 tens and no hundreds. The units and tens are compared separately, and if they are same, no change is brought. If the units and tens are different then the new units and tens control points 13 are calculated and stored in a database 15. The new number (unit or hundred) starts to take shape, and a delay of X ms is provided for the transformation from one number to another. Let us consider, the only unit as an example, from 5 to 6. The Bezier curve is drawn from the start point of 6 to its first control point 20. Once it is drawn, the first control point becomes the start point, and the next control point becomes the end point 21. This continues until the end point 21 of six are achieved, and hence a smooth transition is witnessed from 5 to 6. The procedure is followed for tens digit and hundreds also, if available.

### Briefed Logic

A set of end points and control points are chosen. The idea is to draw four cubic Bezier curves A1, A2, A3, A4 as shown in Figure 1. A path is created and moved to the first end point. From there, a Bezier curve is drawn to the second end point using the given control points. This end point will be the □ first□ end point for the next segment, and so on. The logic would draw the numbers without any animation. To include some animation bits, each transition is defined by X number of frames, called at Y millisecond interval. The first two and last two frames are static as like the number stops for a heartbeat. The in-between n frames map the end points and control points for the segments between the numbers and draws a part of the transition based on the interpolated value. This would change the curves from one to another, with in-between curves looking twisted and turned. Figure 1 displays the control points set for number three.

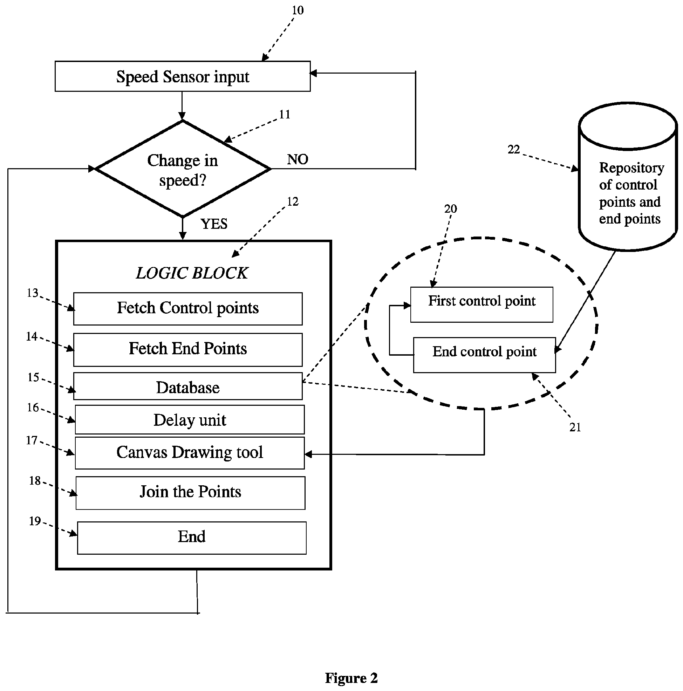

Figure 2 explains the flow of thread transition wherein a speed sensor generates a signal 10 indicative of vehicle speed. The speed is always checked with the previous speed 11. If the speed is not the same, the speed sensor output is provided to an instrument cluster. The instrument cluster has a logic block 12, in which the speed is split into units, tens and hundreds. The previous speed is also stored in the logic block as units, tens and hundred. For example, say the old speed is 50, and current speed is 69. So, the old speed 50 is split into 5 units, 0 tens and no hundreds. The current speed is 69, so 6 units, 9 tens and no hundreds. The units and tens are compared separately and if they are same, no change is brought. If the units and tens are different then the new units and tens control points 13 and end points 14 are calculated and stored in a database 15. These calculated control and end points are then stored in a common repository for future use 22. The new number (unit or hundred) starts to take shape which is done using a canvas drawing tool 17, and a delay of X ms is provided by the delay unit 16 for the transformation from one number to another.

Let us consider, the only unit as an example, from 5 to 6. The Bezier curve is drawn from the start point of 6 to its first control point 20. Once it is drawn, the first control point becomes the start point, and the next control point becomes the end point 21. This continues until the end point 21 of six are achieved and hence a smooth transition is witnessed from 5 to 6. Finally, all the points are joined in a seamless manner 18. The procedure is followed for tens digit and hundreds also, if available. If the required transition is achieved the loop comes out of logic block 19, and the speed sensor continues to check for speed change.

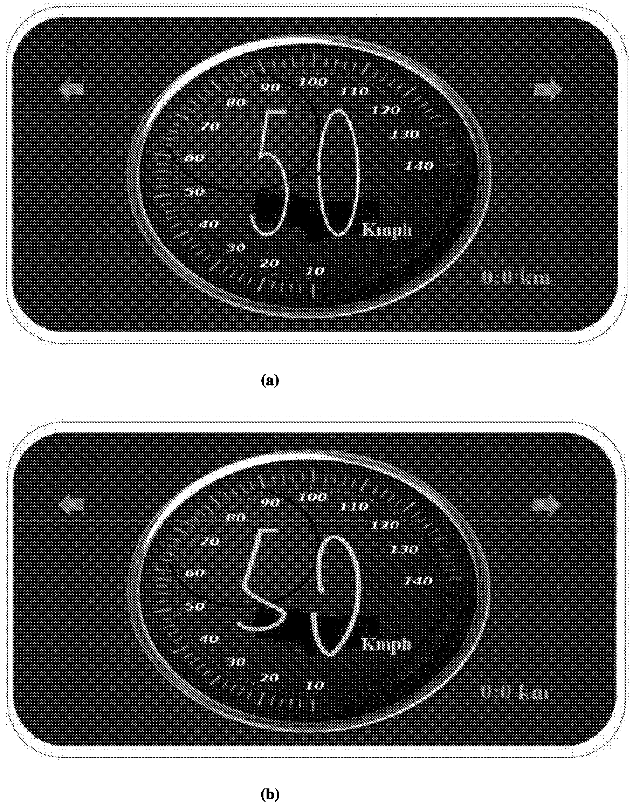

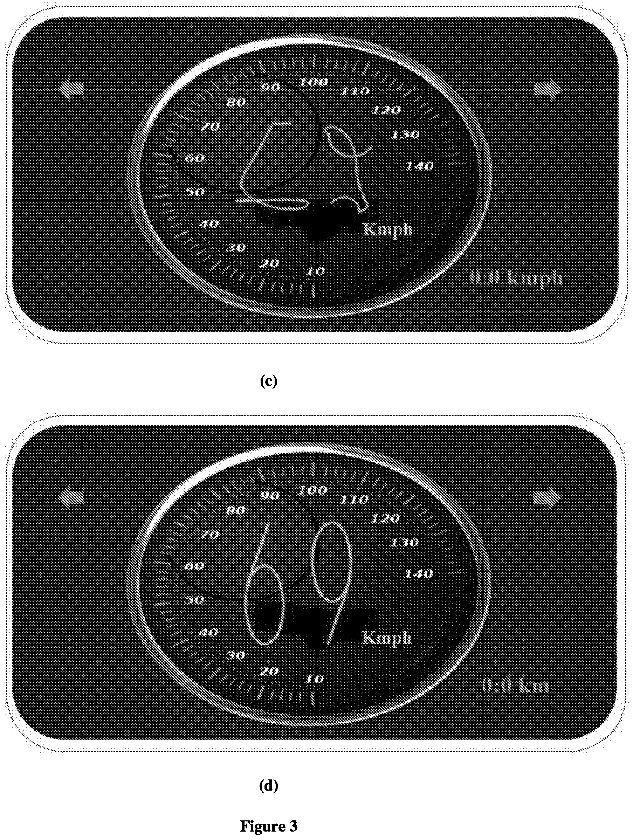

Figure 3 explains the number transition from 50 to 69. A Bezier curve is a parametric curve frequently used in computer graphics and related fields. Generalizations of Bezier curves to higher dimensions are called Bezier surfaces. Bezier curves are used in the time domain, particularly in animation, user interface design, and smoothing cursor trajectory in eye gaze controlled interfaces. For example, a Bezier curve can be used to specify the velocity over time of an object such as an icon moving from A to B, rather than merely moving at a fixed number of pixels per step.[1]

When animators or interface designers talk about the "physics" or "feel" of an operation, they may be referring to the particular Bezier curve used to control the velocity over time of the move. [1]

Using the above procedure, the transitions can be done in different forms inside a speedometer as discussed below. These examples do not form part of the invention.

### Burst Transition

During a change in speed, the number is hidden for a few seconds, burst the particles at that interval and then display the next speed after the explosion. This gives a feeling of bursting the numbers while there is a change in speed.

The Concept of an explosion: An explosion is nothing more than a bunch of particles (be them pixels, small shapes or images) scattered across the screen, originating from a single point. Assuming, that all particles originate from a single point, for simplification, will create a few particles and place them in one place (the origin), and give them random forces. A force is a vector quantity which means that contains magnitude and direction. The magnitude will determine the speed, and the direction will direct the particle to select a path.

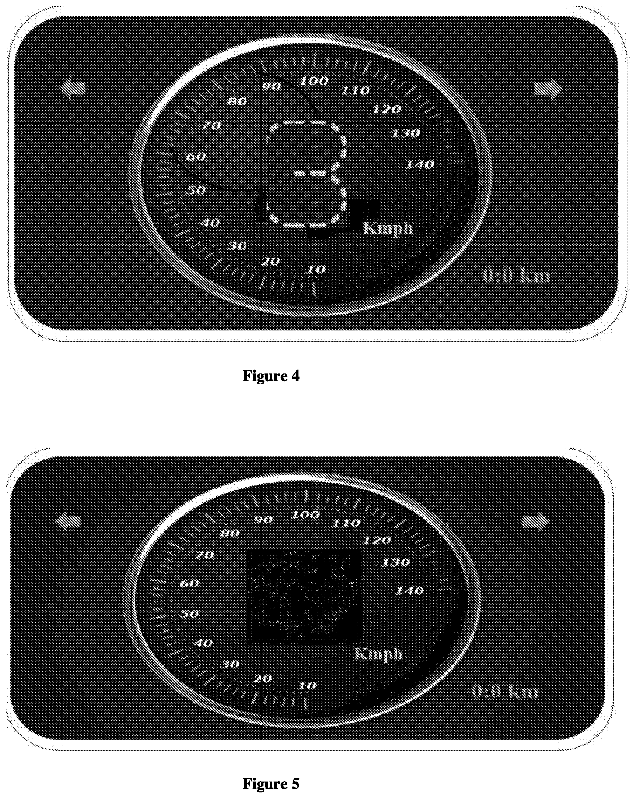

Figure 4 explains the control points set for number three. Figure 5 explains how the burst of numbers is shown.

### Dots Transition

During a change in speed, the number transition is represented as dots forming numbers.

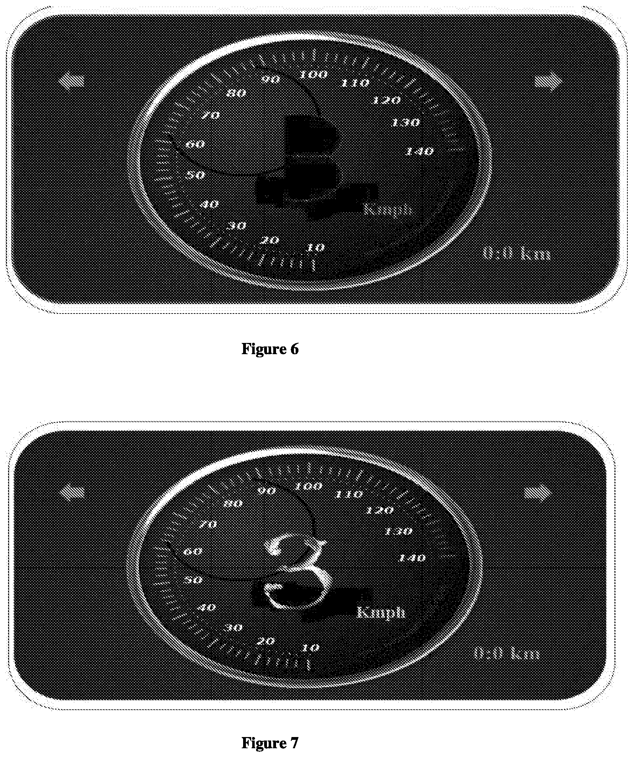

Figure 6 explains the display of numbers in dots transition. The logic is similar to alphanumeric display. The dots are placed as in alphanumeric display and are hidden, and made visible according to the change in number. The animation is very smooth between the speed changes.

### Smoke away Transition

During a change in speed, the number transition is represented as smoke forming numbers.

Figure 7 shows the display of numbers in smoke transition. The numbers are broken down into particles and using the particle system, the smoke effect is rendered. Each particle is presented as an alpha masked image. Hence, the user gets a smoky feeling of number transition.

### Flipping in Transition

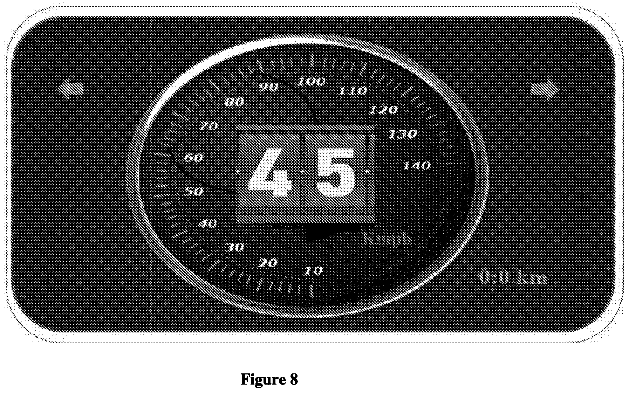

Figure 8 shows the flipping of numbers. The flipping transition of numbers during speed change is obtained by animating a spinner with a set of predetermined values. The spinner is rotated according to the change in speed.

An information display system such as a vehicle speedometer could also have a combination of the above-mentioned number transition methods. For example, vehicle speed could change using thread-type transition, engine speed could change using burst transition, distance traveled could change using dots transition, etc.

### REFERENCES

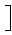 Bezier curve 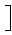 ,Wikipedia,https://en.wikipedia.org/wiki/B%E9zier_curve.

## Claims

1. A digital speedometer display for a vehicle, comprising:
an instrument cluster, a logic block (12), said logic block (12) being capable of receiving, as input, one or more signal values including a previous signal value and a current signal value, said one or more signal values being generated by a sensor of the vehicle,
wherein said logic block (12) includes:
a database (15),
a delay unit (16),
a canvas drawing tool (17), and
wherein the digital speedometer display further comprises a repository (22),
**characterized in that**
said digital speedometer display is configured to compare said current signal value with said previous signal value for determining difference between said current signal value and said previous signal value,
said logic block (12) being configured to split said current signal value and said previous signal value into a units digit, a tens digit and a hundreds digit,
said logic block (12) is configured to compare each of said units digit, tens digit and hundreds digit of said previous signal value respectively with a corresponding value of said units digit, tens digit and hundreds digit of said current signal value;
wherein said logic block (12) is capable of calculating new control points (13) and end points (14), and storing them in said database (15);
wherein said canvas drawing tool (17) is configured to draw a Bezier curve for each of said units, tens, and hundreds digits of said current signal values from a calculated start point, which is one of the end points (14), (13) to a first control point (20) and, once drawn,
said first control point (20) becomes the start point (13), the next control point becomes the first control point (21), which continues till the other end point (14) is achieved, for achieving transition of each digit of said previous signal value to said current signal value;
wherein said canvas drawing tool (17) is configured to join each of said control points for enabling transformation of each digit of said previous signal value to said current signal value; and
wherein said delay unit (16) is capable of providing a delay of X ms for enabling a transformation of numbers on said instrument cluster.

2. A method for displaying digits in a digital speedometer display for a vehicle, the method comprising the steps of:
generating, by a sensor of said vehicle, one or more signal values (10) indicative of a vehicle parameter, wherein said one or more signal values include a current signal value and a previous signal value;
comparing, by said digital speedometer display, said current signal value with said previous signal value for determining difference between said current signal value and said previous signal value;
providing said one or more signal values (10) to an instrument cluster based on said comparison;
splitting, by a logic block (12) of said instrument cluster, said current signal value and said previous signal value into a respective units digit, tens digit and hundreds digit;
comparing, by said logic block (12), each of said units, tens, and hundreds digits of said current signal value with said units, tens, and hundreds digits of said previous signal value;
calculating, by said logic block (12), new control points (13) and end points (14) based on said comparison of digits of said current signal value and said previous signal value, said control points (13) and end points (14) being stored in the database (15);
drawing, by a canvas drawing tool (17), for each of said units, tens, and hundreds digits of said current signal values, a Bezier curve from a calculated start point (13) to a first control point (20), once illustrated, said first control point (20) becoming the start point (13),
the next control point becoming the first control point (21), which continues till the end control point (21) is achieved, for achieving transition of each digit of said one or more previous signal values to said one or more current signal values;
joining (18), by said drawing tool (17), each of said control points for enabling transformation of each digit of said previous signal value to said current signal value;
providing, by a delay unit (16), a delay of X ms for each digit for enabling a transformation of numbers on said instrument cluster; and
displaying, by said instrument cluster, said current signal value.

3. The method of claim 2, wherein said method includes continuously checking by said sensor for any change in said one or more signal values, when the required transition is achieved and the loop comes out of the logic block (19).

4. The digital speedometer display of claim 1, wherein said first control points (20) and end end points (21) are stored in said repository (22).

5. The digital speedometer display of claim 1, wherein said speedometer is applied in a system with a digital display unit, and/or a vehicle using a digital display.

6. The digital speedometer display of claim 1, wherein said sensor is a vehicle speed sensor, and said current and previous signal values are vehicle speed values.

## Patentansprüche

1. Digitale Geschwindigkeitsanzeige für ein Fahrzeug, aufweisend:
ein Kombi-Instrument, einen Logikblock (12), wobei der Logikblock (12) zum Empfangen eines oder mehrerer Signalwerte fähig ist, einschließlich eines vorherigen Signalwerts und eines aktuellen Signalwerts als Eingabe, wobei der Signalwert bzw. die Signalwerte von einem Sensor des Fahrzeugs erzeugt werden,
wobei der Logikblock (12) beinhaltet:
eine Datenbank (15),
eine Verzögerungseinheit (16),
ein Zeichenwerkzeug (17); und
wobei die digitale Geschwindigkeitsanzeige zudem ein Speicher (22) aufweist,
**dadurch gekennzeichnet, dass**
die digitale Geschwindigkeitsanzeige dazu eingerichtet ist, den aktuellen Signalwert mit dem vorherigen Signalwert zu vergleichen, zum Bestimmen einer Differenz zwischen dem aktuellen Signalwert und dem vorherigen Signalwert,
wobei der Logikblock (12) dazu eingerichtet ist, den aktuellen Signalwert und den vorherigen Signalwert in eine Einerstelle, eine Zehnerstelle und eine Hunderterstelle aufzuteilen,
der Logikblock (12) ist dazu eingerichtet, jede von der Einerstelle, Zehnerstelle und Hunderterstelle des vorherigen Signalwerts jeweils mit dem entsprechenden Wert der Einerstelle, Zehnerstelle und Hunderterstelle des aktuellen Signalwerts zu vergleichen;
wobei der Logikblock (12) fähig ist, neue Kontrollpunkte (13) und Endpunkte (14) zu berechnen und diese in der Datenbank (15) zu speichern;
wobei das Zeichenwerkzeug (17) dazu eingerichtet ist, für jede von der Einerstelle, Zehnerstelle und Hunderterstelle der aktuellen Signalwerte eine Bézier-Kurve von einem berechneten Startpunkt (13), der einer der Endpunkte (14) ist, zu einem ersten Kontrollpunkt (20) zu zeichnen, und nach dem Zeichnen dieser wird der erste Kontrollpunkt (20) zum Startpunkt (13), der nächste Kontrollpunkt wird zum ersten Kontrollpunkt (21), was so lange fortgesetzt wird, bis der andere Endpunkt (14) erreicht ist, um einen Übergang jeder Ziffer des vorherigen Signalwerts zu dem aktuellen Signalwert zu erreichen;
wobei das Zeichenwerkzeug (17) dazu eingerichtet ist, jeden der Kontrollpunkte zu verbinden, um die Umwandlung jeder Ziffer des vorherigen Signalwerts in den aktuellen Signalwert zu ermöglichen; und
wobei die Verzögerungseinheit (16) fähig ist, eine Verzögerung von X ms zu liefern, um eine Umwandlung von Zahlen auf dem Kombi-Instrument zu ermöglichen.

2. Verfahren zum Anzeigen von Ziffern in einer digitalen Geschwindigkeitsanzeige für ein Fahrzeug, wobei das Verfahren die folgenden Schritte umfasst:
Erzeugen eines oder mehrerer einen Fahrzeugparameter angebender Signalwerte (10) durch einen Sensor des Fahrzeugs, wobei der bzw. die Signalwerte einen aktuellen Signalwert und einen vorherigen Signalwert umfassen;
Vergleichen des aktuellen Signalwerts mit dem vorherigen Signalwert durch die digitale Geschwindigkeitsanzeige, zum Bestimmen einer Differenz zwischen dem aktuellen Signalwert und dem vorherigen Signalwert;
Liefern des bzw. der Signalwerte (10) an ein Kombi-Instrument aufgrund des Vergleichs;
Aufteilen des aktuellen Signalwerts und des vorherigen Signalwerts in jeweils eine Einerstelle, Zehnerstelle und Hunderterstelle durch einen Logikblock (12) des Kombi-Instruments;
Vergleichen jeder von der Einer-, Zehner- und Hunderterstellen des aktuellen Signalwerts mit den Einer-, Zehner- und Hunderterstellen des vorherigen Signalwerts durch den Logikblock (12);
Berechnen neuer Kontrollpunkte (13) und Endpunkte (14) durch den Logikblock (12) aufgrund des Vergleichs der Ziffern des aktuellen Signalwerts und des vorherigen Signalwerts, wobei die Kontrollpunkte (13) und Endpunkte (14) in der Datenbank (15) gespeichert werden;
Zeichnen, durch ein Zeichenwerkzeug (17), einer Bézier-Kurve für jede von der Einer-, Zehner- und Hunderterstellen der aktuellen Signalwerte von einem berechneten Startpunkt (13) zu einem ersten Kontrollpunkt (20), wobei nach deren Darstellung der erste Kontrollpunkt (20) zum Startpunkt (13), der nächste Kontrollpunkt zum ersten Kontrollpunkt (21) wird, was so lange fortgesetzt wird, bis der Endkontrollpunkt (21) erreicht wird, zum Erreichen eines Übergangs jeder Ziffer des bzw. der vorherigen Signalwerte zu dem bzw. den aktuellen Signalwerten;
Verbinden (18) jedes der Kontrollpunkte durch das Zeichenwerkzeug (17), um eine Umwandlung jeder Ziffer des vorherigen Signalwerts in den aktuellen Signalwert zu ermöglichen;
Liefern einer Verzögerung von X ms für jede Ziffer durch eine Verzögerungseinheit (16), um eine Umwandlung von Zahlen auf dem Kombi-Instrument zu ermöglichen; und
Anzeigen des aktuellen Signalwerts seitens des Kombi-Instruments.

3. Verfahren nach Anspruch 2, wobei das Verfahren das kontinuierliche Überprüfen, durch den Sensor, auf Änderungen bei dem bzw. den Signalwerten, wenn der erforderliche Übergang erreicht ist und die Schleife aus dem Logikblock (19) beendet wird.

4. Digitale Geschwindigkeitsanzeige nach Anspruch 1, wobei die ersten Kontrollpunkte (20) und Endpunkte (21) in dem Speicher (22) gespeichert sind.

5. Digitale Geschwindigkeitsanzeige nach Anspruch 1, wobei der Geschwindigkeitsmesser in einem System mit einer digitalen Anzeigeeinheit und/oder einem Fahrzeug mit einer digitalen Anzeige verwendet wird.

6. Digitale Geschwindigkeitsanzeige nach Anspruch 1, wobei der Sensor ein Geschwindigkeitssensor einer Fahrzeuggeschwindigkeit ist und die aktuellen und vorherigen Signalwerte Fahrzeuggeschwindigkeitswerte sind.

## Revendications

1. Affichage numérique de compteur de vitesse pour un véhicule, comprenant :
un tableau de bord, un bloc logique (12), ledit bloc logique (12) étant capable de recevoir, en tant qu'entrée, une ou plusieurs valeurs de signal comprenant une valeur de signal précédente et une valeur de signal actuelle, ladite ou lesdites valeurs de signal étant générées par un capteur du véhicule,
ledit bloc logique (12) comportant :
une base de données (15),
une unité de retard (16),
un outil de dessin graphique (17), et
l'affichage numérique de la vitesse comportant en outre un référentiel (22),
**caractérisé en ce que**
ledit affichage numérique de la vitesse est configuré pour comparer ladite valeur de signal actuelle avec ladite valeur de signal précédente afin de déterminer la différence entre ladite valeur de signal actuelle et ladite valeur de signal précédente,
ledit bloc logique (12) étant configuré pour diviser ladite valeur de signal actuelle et ladite valeur de signal précédente en un chiffre des unités, un chiffre des dizaines et un chiffre des centaines,
ledit bloc logique (12) étant configuré pour comparer chacun desdits chiffres des unités, des dizaines et des centaines de ladite valeur de signal précédente avec respectivement une valeur correspondante desdits chiffres des unités, des dizaines et des centaines de ladite valeur de signal actuelle ;
ledit bloc logique (12) étant capable de calculer de nouveaux points de contrôle (13) et points finaux (14), et de les mémoriser dans ladite base de données (15) ;
ledit outil de dessin graphique (17) étant configuré pour dessiner une courbe de Bézier pour chacun desdits chiffres des unités, des dizaines et des centaines desdites valeurs de signal actuelles à partir d'un point de départ calculé (13), qui est l'un des points d'arrivée (14), jusqu'à un premier point de contrôle (20) et,
une fois dessiné, ledit premier point de contrôle (20) devient le point de départ (13), le point de contrôle suivant devient le premier point de contrôle (21), ce qui se poursuit jusqu'à ce que l'autre point d'extrémité (14) soit atteint, afin de réaliser la transition de chaque chiffre de ladite valeur de signal précédente vers ladite valeur de signal actuelle ;
ledit outil de dessin graphique (17) étant configuré pour relier chacun desdits points de contrôle afin de permettre la transformation de chaque chiffre de ladite valeur de signal précédente en ladite valeur de signal actuelle ; et
ladite unité de retard (16) étant capable de fournir un retard de X ms pour permettre une transformation des chiffres sur ledit tableau de bord.

2. Procédé d'affichage de chiffres sur un compteur de vitesse numérique pour un véhicule,
le procédé comprenant les étapes suivantes :
générer, à l'aide d'un capteur dudit véhicule, une ou plusieurs valeurs de signal (10) indicatives d'un paramètre du véhicule, ladite ou lesdites valeurs de signal comprenant une valeur de signal actuelle et une valeur de signal précédente ;
comparer, à l'aide dudit affichage numérique du compteur de vitesse, ladite valeur actuelle du signal avec ladite valeur précédente du signal afin de déterminer la différence entre ladite valeur actuelle du signal et ladite valeur précédente du signal ;
fournir ladite ou lesdites valeurs du signal (10) à un tableau de bord sur la base de ladite comparaison ;
diviser, à l'aide d'un bloc logique (12) dudit tableau de bord, ladite valeur actuelle du signal et ladite valeur précédente du signal en un chiffre des unités, un chiffre des dizaines et un chiffre des centaines respectifs ;
comparer, à l'aide dudit bloc logique (12), chacun desdits chiffres des unités, des dizaines et des centaines de ladite valeur de signal actuelle avec lesdits chiffres des unités, des dizaines et des centaines de ladite valeur de signal précédente ;
calculer, à l'aide dudit bloc logique (12), de nouveaux points de contrôle (13) et points finaux (14) sur la base de ladite comparaison des chiffres de ladite valeur de signal actuelle et de ladite valeur de signal précédente, lesdits points de contrôle (13) et points finaux (14) étant mémorisés dans la base de données (15) ;
dessiner, à l'aide d'un outil de dessin graphique (17), pour chacun desdits chiffres des unités, des dizaines et des centaines desdites valeurs de signal actuelles, une courbe de Bézier à partir d'un point de départ calculé (13) jusqu'à un premier point de contrôle (20), et une fois illustré, ledit premier point de contrôle (20) devenant le point de départ (13), le point de contrôle suivant devenant le premier point de contrôle (21), ce qui se poursuit jusqu'à ce que le point de contrôle final (21) soit atteint, afin d'obtenir la transition de chaque chiffre de ladite ou lesdites valeurs de signal précédentes vers ladite ou lesdites valeurs de signal actuelles ;
joindre (18), à l'aide dudit outil de dessin (17), chacun desdits points de contrôle afin de permettre la transformation de chaque chiffre de ladite valeur de signal précédente vers ladite valeur de signal actuelle ;
fournir, par une unité de retard (16), un retard de X ms pour chaque chiffre afin de permettre une transformation des nombres sur ledit tableau de bord ; et
afficher, par ledit tableau de bord, ladite valeur de signal actuelle.

3. Procédé selon la revendication 2, dans lequel ledit procédé comprend la vérification continue par ledit capteur de tout changement dans ladite ou lesdites valeurs de signal, lorsque la transition requise est atteinte et que la boucle sort du bloc logique (19).

4. Affichage numérique de compteur de vitesse selon la revendication 1, dans lequel lesdits premiers points de contrôle (20) et points finaux (21) sont mémorisés dans ledit référentiel (22).

5. Affichage numérique du compteur de vitesse selon la revendication 1, dans lequel ledit compteur de vitesse est appliqué dans un système avec une unité d'affichage numérique et/ou un véhicule utilisant un affichage numérique.

6. Affichage numérique du compteur de vitesse selon la revendication 1, dans lequel ledit capteur est un capteur de vitesse du véhicule, et lesdites valeurs de signal actuelles et précédentes sont des valeurs de vitesse du véhicule.
